# EUROPÄISCHE PATENTSCHRIFT

(11) **EP 0 274 572 B1**
(45) Veröffentlichungstag und Bekanntmachung des Hinweises auf die Patenterteilung: **14.04.1993**
(21) Anmeldenummer: 87114302.0
(22) Anmeldetag: 30.09.1987
(51) Int. Cl.: G01N 21/88, G11B 7/26, G02B 26/10

(54) **Scanner zur optischen Abtastung von Objekten, insbesondere Aufzeichnungsplatten**
Device for the optical scanning of objects, especially record discs
Dispositif de balayage optique, en particulier pour disques d'enregistrement

(30) Priorität: 12.01.1987 DE 8700520 U
(43) Veröffentlichungstag der Anmeldung: 20.07.1988
(73) Patentinhaber: Erwin Sick GmbH Optik-Elektronik, D-79183 Waldkirch (DE)
(72) Erfinder: Ostertag, Klaus, D-8000 München 71 (DE); Pietzsch, Karl, D-8192 Geretsried (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 123 929
- EP-A- 0 020 880
- DE-A- 3 212 437
- US-A- 3 854 044
- IBM TECHNICAL DISCLOSURE BULLETIN, Band 28, Nr. 2, Juli 1985, Seiten 493-495, New York, US; "Measuring thickness of epitaxial layer"
- PATENT ABSTRACTS OF JAPAN, Band 6, Nr. 38 (P-105)[916], 9. März 1982;& JP-A-56 155 916

## Beschreibung

Die Erfindung betrifft eine optische Fehlerinspektionsvorrichtung der im Oberbegriff des Patentanspruchs 1 angegebenen Art.

Derartige Fehlerinspektionsvorrichtungen mit einem Scanner, wie sie aus der EP-A-0 123 929 bekannt sind, werden bei der produktionsbegleitenden Prüfung von CD-Aufzeichnungsplatten (Compact Disc) eingesetzt. Letztere sind mit einer durchsichtigen Schutzschicht überzogene metallisierte Kunststoffscheiben, auf denen eine digitale Information, insbesondere ein Audio- oder Videosignal, in Form mikroskopischer Erhebungen und Vertiefungen untergebracht sind. Zur Wiedergabe werden die CD-Aufzeichnungsplatten mit einem Laserstrahl ausgelesen, der an der Metallschicht reflektiert wird. Nach demselben Prinzip arbeitet ein bei der Inspektion von CD-Aufzeichnungsplatten verwendeter Scanner. Dieser erlaubt es, mit einem schnell abgelenkten Laserstrahl unter gleichzeitiger Rotation der Platte die Plattenoberfläche lückenlos abzutasten und dabei Plattenfehler zu detektieren, die eine Veränderung des reflektierten und/oder gebeugten Laserlichtes hervorrufen.

Es ist bekannt, das kohärente Laserlicht in Scanrichtung gesehen parallel zur Plattennormalen, senkrecht zur Scanrichtung gesehen aber unter einem kleinen Winkel zur Plattennormalen auf die CD-Aufzeichnungsplatte auffallen zu lassen. Der Winkel dient dabei zur Trennung des einfallenden und des von der Platte zurückreflektierten Lichts. Er ist klein, beispielsweise ca. 1,5°, damit durch die Trennung von einfallendem und reflektiertem Licht keine nennenswerte Vergrößerung des Lichtflecks oberhalb der reflektierenden Metallfläche und quer zur Scanrichtung eintritt, und damit eine entsprechend hohe Meßgenauigkeit und Fehlerempfindlichkeit auch für Fehler oberhalb der Metallfläche - im Substrat oder auf der Ausleseseite erreicht wird. Der einfallende Laserstrahl durchdringt die ca. 1,2 mm dicke Kunststoffschicht der CD-Aufzeichnungsplatte, und er wird von der darunterliegenden metallischen Reflexbeschichtung reflektiert. Dabei erzeugt das Informationsmuster der CD-Aufzeichnungsplatte, welches wie ein Beugungsgitter wirkt, mehrere diskrete Beugungsordnungen. Das reflektierte Licht der nullten und der diskreten höheren Beugungsordnungen wird an den Grenzflächen zwischen Luft und Kunststoff einerseits und Kunststoff und Reflexbeschichtung andererseits mehrfach reflektiert, wobei jeder Laserstrahl beim Wiederauftreffen auf die Informationsspuren der CD-Aufzeichnungsplatte erneut diskrete Beugungsordnungen erzeugt. Auf diese Weise kommt es bei entsprechender Geometrie der Grenzflächen zueinander zu Lichtstrahlüberlagerungen als Interferenzen gleicher Dicke. Das führt zu deutlichen Modulationen des Empfangssignals des von der Platte kommenden, reflektierten und/oder gebeugten Lichtes, wodurch die Detektion von Herstellungsfehlern der CD-Aufzeichnungsplatte erschwert und die Genauigkeit des Prüfverfahrens herabgesetzt wird.

Aus der EP-A-0 020 880 ist eine optische Fehlersuchvorrichtung für Gewebe bekannt, bei der zur Erzeugung eines entlang einer Abtastlinie auf eine Gewebebahn verschiebbaren Abtastlichtflecks ein Spiegelrad von einer Lichtquelle beleuchtet wird. Das vom Spiegelrad reflektierte Licht wird über einen streifenförmigen Hohlspiegel auf die Gewebebahn gelenkt.

Aus der JP-A 56-155 916 ist eine Abtasteinrichtung bekannt, bei der ein Laserlichtstrahl über einen Schwingspiegel, ein Spiegelrad und einen Hohlspiegel auf eine Projektionsoberfläche gelenkt wird. Der Schwingspiegel ändert dabei die Richtung des Lichtstrahls in der Weise, daß der Einfallswinkel des Lichtstrahls senkrecht zur Abtastrichtung variabel ist.

Aus der US-A-3 854 044 ist schließlich eine Vorrichtung zum Messen der spektralen Transmission eines filmartigen Materials bekannt, bei dem ein konvergentes Einfallslichtbündel so auf die Oberfläche des Filmmaterials gelenkt wird, daß sein Mittenstrahl einen Winkel 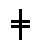 O mit der normalen zur Filmoberfläche einschließt. Dabei weist sowohl der vom Material reflektierte als auch der durch das Material hindurchgegangene Strahl Intensitätsänderungen infolge von Interferenzen auf, die durch Reflektion des Lichts innerhalb des Films erzeugt werden.

Da zur Bestimmung der spektralen Transmission des Filmmaterials das Intensitätsverhältnis zwischen dem reflektierten und dem transmittierten Strahl bestimmt werden muß, heben sich die Intensitätsschwankungen infolge der Interferenzen gegenseitig auf, da diese Intensitätsänderungen in beiden Strahlen einander entsprechen.

Die Aufgabe der vorliegenden Erfindung ist es, eine neue optische Fehlerinspektionsvorrichtung der eingangs genannten Art zu schaffen, insbesondere soll es ermöglicht werden, Interferenzen, die zu einer Modulation des Empfangssignals führen, in wirkungsvoller Weise zu unterdrücken, ohne daß dabei die Genauigkeit der Fehlererkennung nennenswert beeinträchtigt wird.

Erfindungsgemäß wird diese Aufgabe durch die kennzeichnenden Merkmale des Patentanspruchs 1 gelöst.

Durch die erfindungsgemäß vorgesehene Neigung des Abtastlichtstrahls gegen die Oberflächennormale der Aufzeichnungsplatte werden die zwischen den Grenzflächen der Aufzeichnungsplatte hin und her reflektierten Laserstrahlen räumlich getrennt. Es verschwinden so die störenden Interferenzerscheinungen.

Der zwischen der Oberflächennormalen und der Projektion des Abtaststrahls auf die durch die Abtastrichtung und die Oberflächennormale definierte Ebene eingeschlossene Einstrahlwinkel ≠ O hat durch die geringfügige, räumliche Trennung von einfallendem und reflektiertem Strahl eine scheinbare Verbreiterung des Abtastlichtflecks in Abtastrichtung, und damit eine scheinbare Fehlerverbreiterung in dieser Richtung zur Folge, insbesondere für Defekte nahe der Plattenoberfläche. Diese scheinbare Fehlerverbreiterung spielt aber für das Inspektionsergebnis keine entscheidende Rolle.

Auch eine durch den leicht schrägen Lichteinfall in Scanrichtung eventuell verursachte, geringsfügige Defokussierung am Anfang und am Ende des Scan- bzw. Abtastbereichs ist bei der Inspektion einer CD-Aufzeichnungsplatte in der Wirkung vernachlässigbar.

Es gibt Alternativen zu der erfindungsgemäß vorgeschlagenen Lösung. Beispielsweise ist es denkbar, die chromatische Kohärenz der Lichtquelle zu stören. Dies würde aber das Ersetzen des Lasers durch eine inkohärente Lichtquelle erforderlich machen, was zahlreiche Nachteile, insbesondere eine Verschlechterung der Signalqualität, mit sich bringt. Weiter ist an eine Störung der räumlichen Kohärenz der Lichtquelle zu denken. Damit gehen aber ähnliche Nachteile einher, und zumindest bei den hohen Abtastfrequenzen von ca. 10 MHz (Scanfrequenz ca. 3 kHz), die hier für die Auslesung von Scanner Video-Signalen erforderlich sind, ist dieses Vorgehen nicht praktikabel.

Eine weitere Alternative zu der erfindungsgemäßen Lösung besteht darin, bei in Scanrichtung gesehen unverändert in Normalenrichtung erfolgender Einstrahlung des Laserstrahls den Winkel zu vergrößern, den dieser quer zur Scanrichtung gesehen mit der Normalen auf die Oberfläche des abzutastenden Objekts einschließt. Bei nur hinreichend großem Winkel, insbesondere bei einem Einstrahlwinkel von mehr als 5°, werden die zwischen den Grenzflächen der CD-Aufzeichnungsplatte hin- und herreflektierten Laserstrahlen ebenfalls räumlich getrennt, so daß die Interferenzerscheinungen verschwinden. Ein relativ großer Einstrahlwinkel senkrecht zur Scanrichtung hat aber für Fehler innerhalb der durchlässigen Kunststoffschicht, und insbesondere nahe der Plattenoberfläche liegende Fehler eine scheinbare Fehlerverlängerung in Spurrichtung zur Folge, weil der einfallende und räumlich getrennte reflektierte Strahl den Fehler nacheinander erfaßt. Die Genauigkeit der Fehlererkennung, d.h. die Fehlerlängenbewertung, wird damit beeinträchtigt.

Der erfindungsgemäße Vorschlag, den Laserstrahl sowohl quer zur Scanrichtung, als auch in Scanrichtung unter jeweils einem kleinen Winkel zur Normalen auf die Oberfläche des abzutastenden Objekts einfallen zu lassen, ist von den Nachteilen der behandelten Varianten frei. Insbesondere können beide Winkel sehr klein gewählt werden, so daß die sich ergebende scheinbare Fehlervergrößerung keine nennenswerte Rolle spielt.

Die Ablenkeinrichtung der erfindungsgemäßen Fehlerinspektionsvorrichtung kann ein in Drehung angetriebenes, polygonales Spiegelrad mit peripheren Spiegelflächen sowie einen Hohlspiegel enthalten, der im Strahlengang zwischen dem Spiegelrad und dem Objekt liegt. Der Hohlspiegel kann dabei als Hohlspiegelstreifen eines vorzugsweise sphärischen oder kreiszylindrischen Hohlspiegels ausgebildet sein.

Für den Scanner einer erfindungsgemäßen Fehlerinspektionsvorrichtung ist eine telezentrische Bauform möglich, bei der die von dem Lichtstrahl getroffene Spiegelfläche des Spiegelrads im Brennpunkt des Hohlspiegels liegt. Um bei einem derartigen telezentrischen Scanner die erfindungsgemäße, leicht schräge Einstrahlung des Laserstrahls in Scan- bzw. Abtastrichtung zu erreichen, stellt man den Scanner insgesamt in Scanrichtung relativ zu dem abzutastenden Objekt unter dem gewünschten Winkel an. Das kann dadurch geschehen, daß man den ganzen Scanner gegenüber dem abzutastenden Objekt, oder dieses Objekt gegenüber dem Scanner verkippt. Ein Vorteil dieser Bauform ist, daß ein herkömmlicher telezentrischer Scanner ohne Änderung seines inneren Aufbaus zum Einsatz kommen kann, und nur eine Änderung seiner Halterung erforderlich ist. Das Erscheinungsbild der Gesamtanordnung ist allerdings ungewohnt.

In weiteren Varianten der Erfindung wird daher vorgeschlagen, ausgehend von einem telezentrischen Scanner der genannten Art die Relativstellung von Spiegelrad und Hohlspiegel geringfügig zu modifizieren, um die gewünschte leicht schräge Einstrahlung des Laserstrahls in Scanrichtung zu erreichen. Man kann dazu den telezentrischen Scanner so dejustieren, daß der Hohlspiegel, verglichen mit der telezentrischen Anordnung, relativ zum Spiegelrad in Scanrichtung unter einem kleinen Winkel geneigt ist. Eine andere Dejustiermöglichkeit besteht darin, den Hohlspiegel, verglichen mit seiner telezentrischen Anordnung, relativ zum Spiegelrad in Scanrichtung parallel zu verschieben. Beide Varianten lassen sich auch miteinander kombinieren, und es versteht sich, daß es allein auf die optische Relativstellung von Hohlspiegel und Spiegelrad ankommt, so daß man auch mit Änderungen einer dazwischen liegenden Optik ein vergleichbares Ergebnis erreichen kann. Der Vorteil entsprechend baulich veränderter Scanner ist, daß sie von außen genauso aussehen, und sich genauso handhaben lassen, wie herkömmliche telezentrische Scanner, wobei aber störende Interferenzerscheinungen durch schräge Einstrahlung des Lichts in Scanrichtung unterdrückt sind.

Die Erfindung wird im folgenden anhand von in den Zeichnungen dargestellten Ausführungsbeispielen näher erläutert.

Schematisch zeigen:
- Fig. 1: die Scanebene eines Scanners, der einen Laserstrahl in Scanrichtung gesehen senkrecht auf die Oberfläche eines abzutastenden Objekts abstrahlt;
- Fig. 2: die Scanebene eines telezentrischen Scanners, der verglichen mit Fig. 1 insgesamt relativ zu dem abzutastenden Objekt geneigt ist, so daß der Laserstrahl in Scanrichtung gesehen mit der Oberflächennormalen des abzutastenden Objekts einen Winkel einschließt;
- Fig. 3: die Scanebene eines Scanners, der ausgehend von der telezentrischen Anordnung durch in Scanrichtung vorgenommenes Verschwenken eines Hohlspiegels dejustiert ist;
- Fig. 4: die Scanebene eines Scanners, der ausgehend von der telezentrischen Anordnung durch in Scanrichtung erfolgte Parallelverschiebung eines Hohlspiegels dejustiert ist;
- Fig. 5: einen Scanner entsprechend der Variante der Fig. 3, wobei der Blick auf die Scanebene gerichtet ist;
- Fig. 6: eine Ansicht des Scanners quer zur Scanrichtung mit Blick in Richtung VI von Fig. 5; Projektionen N nach n in Fig. 5 und 6 lassen jeweils die Scanrichtung erkennen.

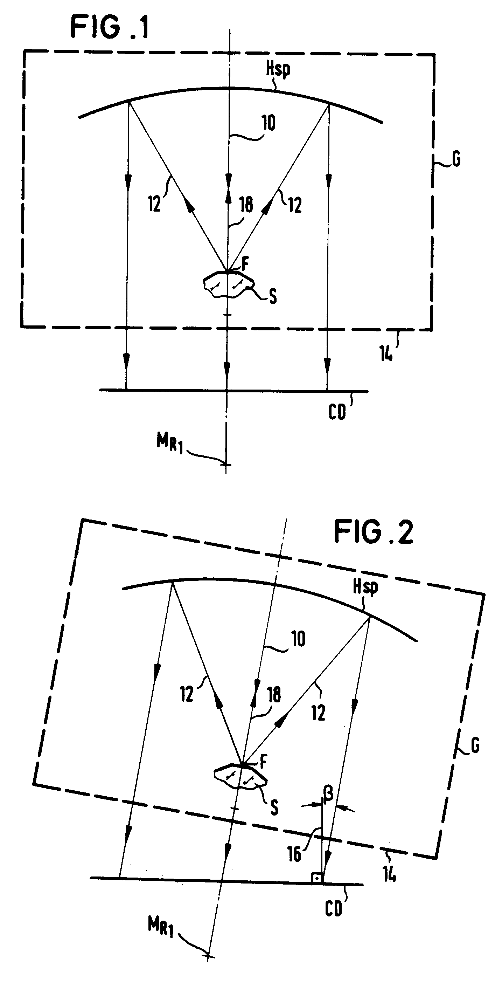

Fig. 1 zeigt einen telezentrischen Scanner, mit dem ein Objekt, insbesondere eine Aufzeichnungsplatte CD abgetastet wird. Der Scanner hat ein Gehäuse G in dem sich ein Spiegelrad S und ein Hohlspiegel Hsp befinden. Das nur abschnittsweise gezeichnete Spiegelrad S ist ein Polygonspiegel, der in Drehung um seinen Mittelpunkt angetrieben ist. Facettenartige Spiegelflächen sind an der Peripherie des Spiegelrads S vorgesehen. Eine der Spiegelflächen wird von einem einfallenden Laserstrahl 10 getroffen.

Der Hohlspiegel Hsp ist parallel zur Scanrichtung in dem Gehäuse G angeordnet. Er ist als Hohlspiegelstreifen ausgebildet. 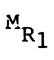
ist das geometrische Zentrum des Hohlspiegels Hsp.

Die wirksame Spiegelfläche des Spiegelrads S befindet sich im Brennpunkt F des Hohlspiegels Hsp , d. h. im halben Abstand zwischen dessen geometrischem Zentrum 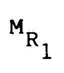
und der Hohlspiegelfläche. Die vom Spiegelrad S reflektierten divergenten Abtaststrahlen 12 werden daher durch den Hohlspiegel Hsp parallel gerichtet. Sie verlassen das Gehäuse G , dessen Unterkante 14 parallel zu dem abzutastenden Objekt CD ausgerichtet ist, und treffen in Scanrichtung gesehen senkrecht auf die Oberfläche des Objekts CD auf. Letzteres wird so bei Drehung des Spiegelrads S wiederholt linear von dem Laserstrahl überstrichen. Im Fall einer Inspektion von CD-Aufzeichnungsplatten (Compact Disc) treten dabei die vorerwähnten Interferenzen und Modulationen des Empfangs-Videosignals auf.

Dem abzuhelfen, wird nach Fig. 2 vorgeschlagenen den telezentrischen Scanner und das abzutastende Objekt CD relativ zueinander in Scanrichtung zu neigen. In der Abbildung ist dazu das Gehäuse G des Scanners relativ zu der Aufzeichnungsplatte CD verschwenkt, so daß die Gehäuseunterkante 14 mit der abzutastenden Oberfläche der Aufzeichnungsplatte CD einen spitzen Winkel einschließt. Selbstverständlich ist es auch möglich, die Aufzeichnungsplatte CD oder ihre Halterung entsprechend zu verschwenken. Der innere Aufbau des Scanners ist gegenüber Fig. 1 nicht geändert. Man erkennt, daß die aus dem Gehäuse G austretenden Laserstrahlen nunmehr in Scanrichtung gesehen mit einer Normalen 16 auf die abzutastende Oberfläche einen Winkel β ungleich Null einschließen. Der Winkel β ist klein; er beträgt maximal ca. 3°. Durch diese leicht schräge Einstrahlung des Laserlichts in Scanrichtung verhindert man Interferenzen an dünnen Schichten und die damit einhergehenden Modulationen des bei der Inspektion von CD-Aufzeichnungsplatten gewonnenen Signals.

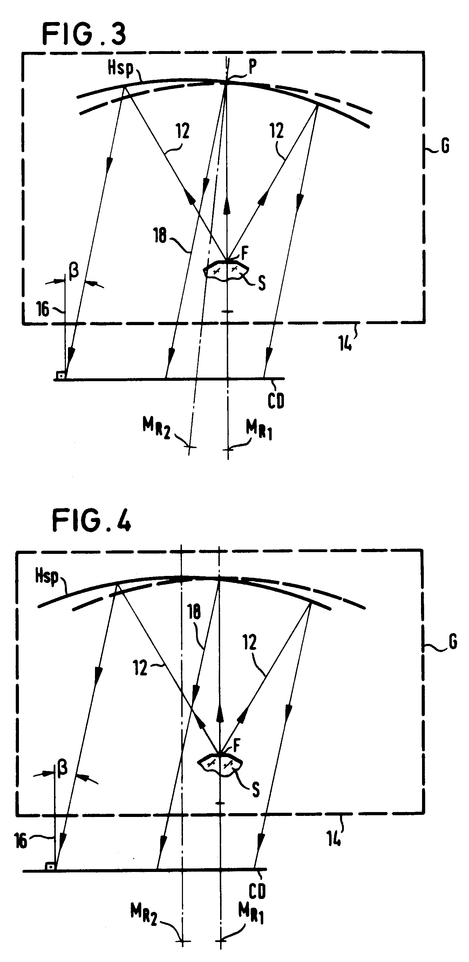

Bei den Varianten gemäß Fig. 3 und Fig. 4 ist das Scannergehäuse parallel zu dem abzutastenden Objekt ausgerichtet, und der Scanner ist verglichen mit der telezentrischen Anordnung der Fig. 1 jeweils geringfügig dejustiert. In Fig. 3 ist dazu der Hohlspiegel Hsp um eine Achse P gedreht, die parallel zu der Drehachse des Spiegelrades S orientiert ist und sich an der Stelle der Hohlspiegeloberfläche befindet, an der der von dem Spiegelrad S reflektierte Mittenstrahl 18 auf den Hohlspiegel Hsp trifft. Der Mittenstrahl 18 wird dadurch nicht mehr in sich zurückreflektiert, sondern vielmehr in Scanrichtung oder entgegen der Scanrichtung versetzt. Dadurch treffen die Laserstrahlen in Scanrichtung gesehen unter einem Winkel ungleich 90° auf die Oberfläche des abzutastenden Objekts CD auf, und die bei senkrechtem Einfall zu beobachtenden Interferenzen verschwinden. Anders als bei der telezentrischen Anordnung der Fig. 1, liegt die wirksame Spiegelfläche des Spiegelrads S nicht genau im Fokus des Hohlspiegels Hsp , was zu kleinen Fokusfehlern am Ende des Scanbereichs führt. Diese beeinträchtigen aber das Scanergebnis insbesondere bei der Inspektion von CD-Aufzeichnungsplatten nicht nennenswert.

In Fig. 4 ist ausgehend von der telezentrischen Anordnung der Fig. 1 der Hohlspiegel Hsp in Scanrichtung oder entgegen der Scanrichtung seitlich verschoben. Dadurch verschiebt sich auch das geometrische Zentrum des Hohlspiegels Hsp von 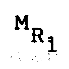
nach 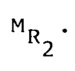
Da die Verbindungslinie zwischen dem geometrischen Zentrum und dem Strahlauftreffpunkt am Hohlspiegel die Winkelhalbierende zwischen einfallendem und ausfallendem Strahl bildet, werden auch hier die Strahlen so abgelenkt, daß sie unter einem Winkel ungleich 90° auf das abzutastende Objekt auftreffen. Damit werden die bei senkrechtem Strahlungseinfall auftretenden Interferenzen unterdrückt, ohne daß merkliche Abbildungsfehler auftreten.

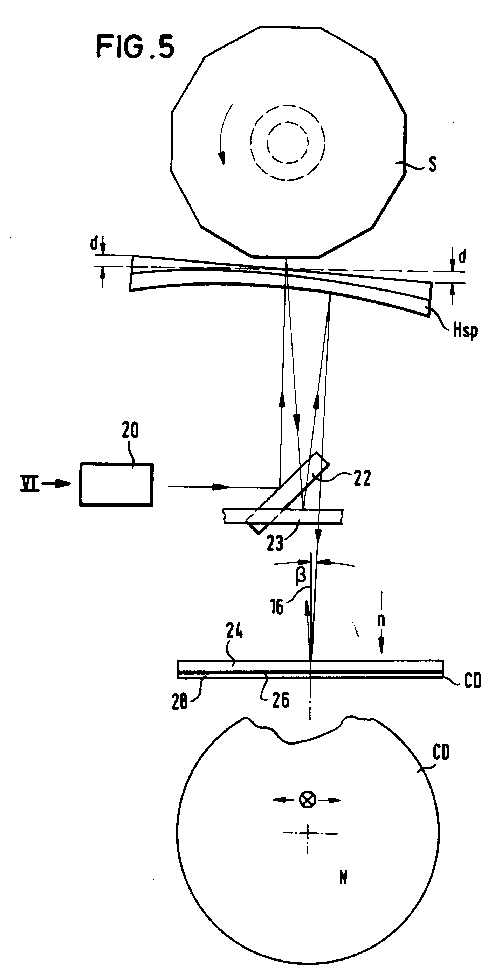

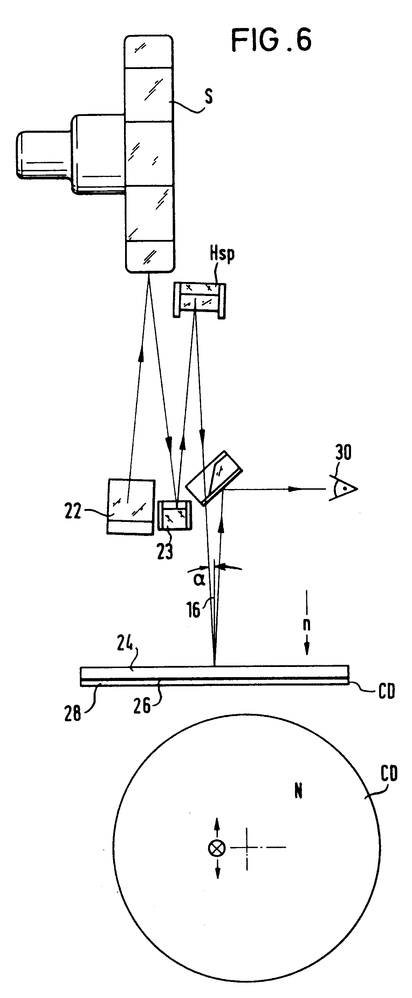

Fig. 5 und 6 zeigen nähere Einzelheiten eines im Grundaufbau telezentrischen Scanners, bei dem nach dem in Fig. 3 illustrierten Prinzip der Hohlspiegel Hsp geringfügig verschwenkt ist. Der Scanner enthält einen Laser 20, von dem ein Laserstrahl ausgeht und über eine nicht näher dargestellte Abbildungsoptik auf einen Umlenkspiegel 22 fällt. In Fig. 6 ist die Einstrahlrichtung die Blickrichtung des Beobachters. Der Umlenkspiegel 22 wirft den Laserstrahl auf das schnell rotierende Spiegelrad S. Das reflektierte Licht gelangt über einen weiteren Umlenkspiegel 23 auf den Hohlspiegel Hsp und von dort auf die abzutastende CD-Aufzeichnungsplatte. Letztere besteht aus einem Trägersubstrat 24, einer darauf aufgebrachten metallischen Reflexschicht 26 und einer Deckschicht 28 aus transparentem Kunststoff. Das von der CD-Aufzeichnungsplatte zurückgestreute Licht tritt wieder in den Scanner ein und wird auf einen geeigneten Detektor 30 geworfen.

Wie man Fig. 5 entnimmt, ist der Hohlspiegel Hsp gegenüber seiner Position bei einem telezentrischen Scanner um einen kleinen Stellhub d verschwenkt. Hierdurch schließt der scannende Laserstrahl mit einer Normalen auf die abzutastende Oberfläche der Aufzeichnungsplatte in Scanrichtung gesehen den gewünschten kleinen Winkel β ein. Damit ist der erfindungsgemäße Schrägeinfall des scannenden Laserstrahls in Scanrichtung realisiert. Wie man Fig. 6 entnimmt, ist überdies der herkömmliche Schrägeinfall des scannenden Laserstrahls quer zur Scanrichtung vorgesehen. Die optische Achse des Laser strahls schließt mit der Normalen 16 auf die abzutastende Oberfläche der Aufzeichnungsplatte quer zur Scanrichtung gesehen einen kleinen Winkel α ein, der dazu dient, das einfallende Licht und das von der Aufzeichnungsplatte zurückgestreute Licht zu trennen. Der Winkel α wird wie bei einem telezentrischen Scanner durch einen gefalteten Strahlengang quer zur Scanrichtung mit entsprechender Anordnung der optischen Elemente erreicht.

Das Maß für die Fehlerbreite bzw. Fehlerlänge eines Defekts ist bei gegebener Scanfrequenz (und damit Scangeschwindigkeit) und gegebener Platten-Rotationsgeschwindigkeit die Zeit, während der der abtastende Laserstrahl den Defekt trifft.

Wird jetzt durch einen Einfallswinkel ≠ 0° der einfallende und der reflektierte Strahl oberhalb der reflektierenden Metallfläche z.T. räumlich getrennt, so wird der abtastende Laserstrahl in einer Fehlerebene oberhalb der Metallfläche scheinbar größer. Es liegen drei Strahlbereiche vor, nämlich einfallender Strahl, Überlappung von einfallendem und reflektiertem Strahl, reflektierter Strahl. Dieser scheinbar größere Abtaststrahl trifft nun einen Defekt oberhalb der reflektierenden Metallfläche längere Zeit. Für das Inspektionssystem ist das genauso, als wenn der feinste Abtaststrahl auf der Metallfläche für dieselbe Zeit einen scheinbar größeren Fehler trifft. Das führt zu einer scheinbaren Fehlervergrößerung besonders für Fehler, die weit von der reflektierenden Metallschicht entfernt sind, also etwa für Beschädigungen auf der Plattenoberfläche (Ausleseseite).

### Liste der Bezugszeichen

- 10 -: einfallender Laserstrahl
- 12 -: divergenter Strahl
- 14 -: Unterkante
- 16 -: Normale
- 18 -: Mittenstrahl
- 20 -: Laser
- 22 -: Umlenkspiegel
- 23 -: Umlenkspiegel
- 24 -: Trägersubstrat
- 26 -: metallische Reflexschicht
- 28 -: Deckschicht
- 30 -: Detektor

## Patentansprüche

1. Optische Fehlerinspektionsvorrichtung mit einer in einer Halterung befindlichen zu untersuchenden Aufzeichnungsplatte (CD), insbesondere Kompaktdisk, wobei die Aufzeichnungsplatte (CD) in ihrer Ebene rotieren kann, und mit einem Scanner zur optischen Abtastung der Aufzeichnungsplatte, der eine kohärente Lichtquelle und eine Ablenkeinrichtung (S, Hsp) aufweist, die einen von der Lichtquelle erzeugten Abtastlichtstrahl parallel zu sich selbst verschiebt und ihn in einer im wesentlichen linearen Abtastbewegung über die Aufzeichnungsplattenoberfläche streichen läßt, wobei die Projektion des Abtastlichtstrahls auf eine Ebene senkrecht zur Abtastrichtung mit der Oberflächennormalen (16) einen kleinen Winkel α einschließt und mit einem Detektor (30) zur Erfassung von Licht, das von der Aufzeichnungsplatte (CD) zurückgeworfen wird,
dadurch **gekennzeichnet,**
daß der Abtastlichtstrahl auch in Abtastrichtung geneigt ist, so daß seine Projektion auf die durch die Abtastrichtung und die Oberflächennormale (16) definierte Ebene mit der Oberflächennormalen (16) einen kleinen Winkel β ungleich 0° und kleiner 3° einschließt, so daß Interferenzen, die zwischen den beiden reflektierenden Grenzflächen des Trägersubstrats (24), nämlich zwischen der metallischen Reflexschicht (26) und der Plattenoberfläche der Aufzeichnungsplatte entstehen und zu einer Modulation des Empfangssignals führen, in wirkungsvoller Weise unterdrückt werden.

2. Fehlerinspektionsvorrichtung nach Anspruch 1,
dadurch **gekennzeichnet,**
daß die Ablenkeinrichtung ein in Drehung angetriebenes, polygonales Spiegelrad (S) mit peripheren Spiegelflächen sowie einen Hohlspiegel (Hsp) enthält, der im Strahlengang zwischen dem Spiegelrad (S) und der Aufzeichnungsplatte (CD) liegt.

3. Fehlerinspektionsvorrichtung nach Anspruch 2,
dadurch **gekennzeichnet,**
daß der Hohlspiegel (Hsp) als Hohlspiegelstreifen eines sphärischen oder kreiszylindrischen Hohlspiegels ausgebildet ist.

4. Fehlerinspektionsvorrichtung nach einem der Ansprüche 1 bis 3,
dadurch **gekennzeichnet,**
daß die wirksame Spiegelfläche des Spiegelrads (S) im Brennpunkt (F) des Hohlspiegels (Hsp) liegt, und daß der Scanner insgesamt in Abtastrichtung relativ zum Objekt (CD) unter dem Winkel β angestellt ist.

5. Fehlerinspektionsvorrichtung nach einem der Ansprüche 1 bis 3,
dadurch **gekennzeichnet,**
daß der Hohlspiegel (Hsp) in Abtastrichtung geneigt ist.

6. Fehlerinspektionsvorrichtung nach einem der Ansprüche 1 bis 3,
dadurch **gekennzeichnet,**
daß der Hohlspiegel (Hsp) relativ zum Spiegelrad (S) in Abtastrichtung parallel verschoben ist.

## Claims

1. Optical fault inspection device having a recording disk to be checked (CD) placed in a holder, in particular a compact disk, wherein the recording disk (CD) can rotate in its plane, the device comprising a scanner for optically scanning the recording disk, which comprises a coherent light source and a deflecting device (S, Hsp) which displaces a scanning light beam generated by the light source parallel to itself and causes the scanning light beam to scan the surface of the recording disc in a substantially linear scanning displacement, with the projection of the scanning light beam onto a plane perpendicular to the scanning direction subtending with the normals to the surface (16) a small angle α, and comprising a detector for directing the light reflected back by the recording disk,
characterized in that the scanning light beam is also inclined in the scanning direction, such that its projection onto the plane defined by the scanning direction and the normals to the surface (16) subtends with the normals to the surface (16) a small angle β different from 0° and smaller than 3°, such that interferences which occur between the two reflecting boundary surfaces of the carrier substrate (24), namely between the metallic reflection layer (26) and the plane surface of the recording disk, and which lead to a modulation of the reception signal, are suppressed in an effective manner.

2. Fault inspection device in accordance with claim 1, characterized in that the light deflecting device contains a rotationally driven polygonal mirror wheel (S) with peripheral mirror surfaces and also a concave mirror (Hsp), with the concave mirror lying in the beam path between the mirror wheel (S) and the recording disk (CD).

3. Fault inspection device in accordance with claim 2, characterized in that the concave mirror (Hsp) is formed as a concave mirror strip of a spherical or regular cylindrical concave mirror.

4. Fault inspection device in accordance with one of the claims 1 to 3, characterized in that the effective mirror surface of the mirror wheel (S) lies at the focal point (F) of the concave mirror (Hsp); and in that the scanner as a whole is disposed at the angle β in the scanning direction relative to the object (CD).

5. Fault inspection device in accordance with one of the claims 1 to 3, characterized in that the concave mirror (Hsp) is inclined in the scanning direction.

6. Fault inspection device in accordance with one of the claims 1 to 3, characterized in that the concave mirror (Hsp) is displaced parallel to the scanning direction relative to the mirror wheel (S).

## Revendications

1. Dispositif optique d'inspection de défauts comportant un disque d'enregistrement à vérifier (CD) placé dans un système de maintien, en particulier un disque compact, dans lequel le disque d'enregistrement (CD) peut tourner dans son plan, le dispositif comprenant un scanner pour balayer optiquement le disque d'enregistrement, qui comprend une source de lumière cohérente et un dispositif déflecteur (S, Hsp) qui déplace un faisceau lumineux de balayage produit par la source lumineuse parallèlement à lui-même et amène le faisceau de lumière de balayage à balayer la surface du disque d'enregistrement dans un déplacement de balayage sensiblement linéaire, où la projection du faisceau lumineux de balayage sur un plan perpendiculaire à la direction de balayage fait avec les normales à la surface (16) un petit angle α, et comprenant un détecteur pour capter la lumière réfléchie en retour par le disque d'enregistrement,
caractérisé en ce que le faisceau de lumière de balayage est également incliné dans la direction de balayage, de telle sorte que sa projection sur le plan défini par la direction de balayage et les normales à la surface (16) fait avec les normales à la surface (16) un petit angle β différent de 0° et inférieur à 3°, de telle sorte que les interférences qui se produisent entre les deux surfaces limite de réflexion du substrat porteur (24), c'est-à-dire entre la couche de réflexion métallique (26) et la surface du disque d'enregistrement, et qui conduisent à une modulation du signal de réception, sont supprimées d'une manière effective.

2. Dispositif d'inspection de défauts selon la revendication 1, caractérisé en ce que le dispositif déflecteur de lumière comprend une roue à miroirs polygonale (S) entraînée en rotation et pourvue de surfaces de miroirs périphériques et un miroir concave (Hsp), lequel se trouve dans le trajet du faisceau entre la roue à miroirs (S) et le disque d'enregistrement (CD).

3. Dispositif d'inspection de défauts selon la revendication 2, caractérisé en ce que le miroir concave (Hsp) est formé sous la forme d'une bande de miroir concave d'un miroir concave sphérique ou cylindrique droit.

4. Dispositif d'inspection de défauts selon l'une quelconque des revendications 1 à 3, caractérisé en ce que la surface de miroir effective de la roue à miroirs (S) est située au foyer (D) du miroir concave (Hsp); et en ce que le scanner dans son ensemble est disposé sous l'angle β dans la direction de balayage par rapport à l'objet (CD).

5. Dispositif d'inspection de défauts selon l'une quelconque des revendication 1 à 3, caractérisé en ce que le miroir concave (Hsp) est incliné dans la direction de balayage.

6. Dispositif d'inspection de défauts selon l'une quelconque des revendication 1 à 3, caractérisé en ce que le miroir concave (Hsp) est déplacé parallèlement à la direction de balayage par rapport à la roue à miroirs (S).
